(19) Europäisches Patentamt

European Patent Office

Office européen des brevets

(11) Veröffentlichungsnummer: **0 526 815 B1**

(12) **EUROPÄISCHE PATENTSCHRIFT**

(45) Veröffentlichungstag der Patentschrift: **30.11.94**

(21) Anmeldenummer: **92112678.5**

(22) Anmeldetag: **24.07.92**

(51) Int. Cl.5: **C14C 3/18**, C14C 3/28, C08G 18/08

(54) **Verfahren zum füllenden Gerben und/oder Nachgerben von Leder.**

(30) Priorität: **06.08.91 DE 4125983**

(43) Veröffentlichungstag der Anmeldung:
**10.02.93 Patentblatt 93/06**

(45) Bekanntmachung des Hinweises auf die
Patenterteilung:
**30.11.94 Patentblatt 94/48**

(84) Benannte Vertragsstaaten:
**CH DE ES GB IT LI**

(56) Entgegenhaltungen:
**EP-A- 0 188 766**
**US-A- 4 106 897**

(73) Patentinhaber: **BAYER AG**

**D-51368 Leverkusen (DE)**

(72) Erfinder: **Träubel, Harro, Dr.**
**Dresdener Strasse 14**
**W-5090 Leverkusen 1 (DE)**
Erfinder: **Dietrich, Manfred, Dr.**
**Dresdener Strasse 16**
**W-5090 Leverkusen 1 (DE)**

**Beschreibung**

Die Erfindung betrifft ein neues Verfahren zum füllenden Gerben und/oder Nachgerben von Leder unter Verwendung von Dispersionen von Polyisocyanat-Polyadditionsprodukten in organischen Polyhydroxylverbindungen als gerberisch aktive Substanzen, die gegebenenfalls in Kombination mit anderen gerberisch aktiven Stoffen und/oder mit üblichen Hilfs- und Zusatzmitteln zum Einsatz gelangen.

Dispersionen von Polyhydrazodicarbonamid-, Harnstoff- und/oder Urethangruppen aufweisenden Polyisocyanat-Polyadditionsprodukten in organischen Polyhydroxylverbindungen, d.h. in oligomeren Polyhydroxylverbindungen des Molekulargewichtsbereichs 500 bis 12000 sind als Verbindungsklasse generell bekannt und z.B. in Houben-Weyl, "Methoden der Organischen Chemie", Band E20 (Stuttgart 1987), Seite 1582 oder auch beispielsweise in DE-AS 1 168 075, DE-OS 2 550 796, DE-OS 2 550 797, DE-OS 3 103 757 oder DE-OS 3 939 964 beschrieben.

Derartige Dispersionen von Polyhydrazodicarbonamiden, Polyharnstoffen oder Polyurethanen in oligomeren Polyolen werden im allgemeinen durch Reaktion eines Diisocyanats mit niedermolekularen Reaktionspartnern mit mindestens zwei gegenüber Isocyanatgruppen reaktionsfähigen Amino- oder Hydroxylgruppen in einem oligomeren Polyol als Reaktionmedium hergestellt. Die Dispersionen finden insbesondere in der technischen Polyurethanchemie, vor allem bei der Herstellung von Polyurethanschaumstoffen zwecks Erhöhung der Stauchhärte Verwendung.

In der Ledergerbung, vor allem der Nachgerbung, wurden in den letzten Jahren in zunehmendem Maße Polyacrylsäurederivate (DE-OS 2 755 087), Oligourethane (DE-OS 2 416 485 oder DE-OS 2 739 378), sowie saure Halbester von Polyhydroxylverbindungen (DE-OS 2 626 430) eingesetzt. Diese Produkte ergeben im allgemeinen besonders gut färbbare und weichere Leder als konventionelle Nachgerbstoffe auf der Basis von Phenolsulfosäure und/oder Dioxidiphenylsulfon- und/oder Naphthalinsulfosäurekondensaten. Der Nachteil dieser Verbindungen ist aber, daß man auf die konventionelle Fettung nicht verzichten kann, wenn man weiche Leder haben will. Die konventionelle Fettungsmittel bestehen aus Emulsionen von Sulfaten, Sulfonsäuren oder Carbonsäure(estern) und Fettalkoholen oder paraffinischen Verbindungen. Für die Qualität, die heute für Leder verlangt wird, bereiten diese Fettungsmittel meist große Probleme, weil sie oxidationsempfindlich sein können und/oder unter thermischer Belastung oder Licht unter Verfärbung reagieren. Auch neigen viele von diesen Verbindungen zum Migrieren aus der Lederschicht in den Narben oder zum Ausdampfen (z.B. in Form von fogging). Auch die Anwendung von Fettungsmitteln kann Probleme aufwerfen, weil die Fettungsmittel, die normalerweise in Emulsion vorliegen, als Emulsion nicht zu stabil und auch nicht zu instabil eingestellt sein müssen, damit die Leder nicht entweder eine schlecht zurichtbare Oberfläche oder eine Losnarbigkeit (die unerwünscht ist) erhalten. Weiterhin kann es auch passieren, daß sie gar nicht aus der Nachgerbflotte aufziehen (siehe dazu z.B. K. Faber (Herfeld, Bibliothek des Leders, Band 3), "Gerbmittel, Gerbung und Nachgerbung" (Frankfurt 1984), Seite 262).

Überraschenderweise wurde nun gefunden, daß man Blöße oder vorgegerbte Leder füllend gerben bzw. nachgerben kann, wenn man gegebenenfalls ionisch modifizierte, Hydrazodicarbonamid-, Harnstoff- und/oder Urethangruppen aufweisende Polyisocyanat-Polyadditionsprodukte in oligomeren Polyhydroxylverbindungen in 1- bis 50 gew.-%ig dispergierter Form als gerberisch aktive Substanzen, gegebenenfalls unter Zuhilfenahme von an sich bekannten anderen gerberisch aktiven Stoffen und/oder den üblichen Hilfs- und Zusatzmitteln verwendet

Gegenstand der Erfindung ist ein Verfahren zum füllenden Gerben und/oder Nachgerben von Leder mit gerberisch aktiven Stoffen, dadurch gekennzeichnet, daß man als gerberisch aktive Stoffe

1- bis 50-gew.-%ige Dispersionen von

a) gegebenenfalls ionisch modifizierten, Hydrazodicarbonamid-` Harnstoff- und/oder Urethangruppen-aufweisenden Polyisocyanat-Polyadditionsprodukten in

b) organischen Polyhydroxylverbindungen des Molekulargewichtsbereichs 500 bis 12 000,

in Mengen von 0,5 bis 30 Gew.-%, bezogen auf Polyisocyanat-Polyadditionsprodukte a) einerseits und Blößen- oder Falzgewicht andererseits, gegebenenfalls in Kombination mit sonstigen gerberisch aktiven Substanzen und/oder mit in der Gerberei üblichen Hilfs- und Zusatzmitteln verwendet.

Bei dem erfindungswesentlichen Dispersionen handelt es sich um solche, die zu 1 bis 50, vorzugsweise 5 bis 30, Gew.-% aus der nachstehend näher beschriebenen dispersen Phase a) und zu 50 bis 99, vorzugsweise 70 bis 95, Gew.-% aus der nachstehend näher beschriebenen kontinuierlichen Phase b) bestehen.

Als kontinuierliche Phase b) kommen insbesondere Hydroxylgruppen-aufweisende Polyether, Polyester, Polythioether, Polyacetale oder Polycarbonate mit 2 bis 8, vorzugsweise 2 bis 3, Hydroxylgruppen pro Molekül und einem aus Funktionalität und Hydroxylgruppengehalt berechenbaren Molekulargewicht von 500 bis 12 000, vorzugsweise 800 bis 6 000 und besonders bevorzugt 800 bis 5 000 in Betracht Die entsprechenden Polyhydroxypolyether werden bevorzugt als kontinuierliche Phase b) eingesetzt.

Geeignete Hydroxylgruppen-aufweisende Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF$_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt Je nach den Co-Komponenten handelt es sich bei den Produkten z.B. um Polythiomischether, Polythioetherester oder Polythioetheresteramide.

Als Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Die Herstellung der erfindungswesentlichen Dispersionen erfolgt vorzugsweise durch Umsetzung der zu den Polyadditionsprodukten a) ausreagierenden Ausgangsmaterialien in den beispielhaft genannten Polyhydroxylverbindungen als Reaktionsmedium. Die die disperse Phase bildenden Polyadditionsprodukte a) stellen insbesondere Umsetzungsprodukte von a1) organischen Polyisocyanaten, insbesondere Diisocyanaten mit a2) niedermolekularen Verbindungen mit mindestens zwei gegenüber Isocyanatgruppen reaktionsfähigen Amino- und/oder Hydroxylgruppen dar.

Als Diisocyanate a1) kommen insbesondere die bekannten Diisocyanate der Polyurethanchemie des Molekulargewichtsbereichs 168 bis 300 in Betracht. Beispielhaft genannt seien 4,4'-Diisocyanatodiphenylmethan, seine technischen Gemische mit 2,4'- und 2,2'-Diisocyanatodiphenylmethan, 2,4-Diisocyanatotoluol, seine technischen Gemische mit bis zu 35 Gew.-%, bezogen auf Gemisch, an 2,6-Diisocyanatotoluol, sowie neben diesen aromatischen Diisocyanaten auch Diisocyanate mit aliphatisch gebundenen Isocyanatgruppen wie Hexamethylendiisocyanat, 1-Isocyanato-3,3,5-trimethyl-5-isocyanatomethyl-cyclohexan (IPDI), 4,4'-Diisocyanatodicyclohexylmethan, Xylylendiisocyanat, 1,4-Diisocyanatocyclohexan oder beliebige Gemische derartiger Diisocyanate. Die Mitverwendung von modifizierten Polyisocyanaten auf Basis derartiger einfacher Diisocyanate ist ebenfalls möglich, jedoch weniger bevorzugt Modifizierte Polyisocyanate sind beispielsweise Uretdion-, Isocyanurat-, Uretonimin-, Carbodiimid-, Biuret- oder Urethangruppen aufweisende Derivate der Diisocyanate, die durch entsprechende, an sich bekannte Modifizierungsreaktionen erhalten werden können.

Als NCO-reaktive Reaktionspartner a2) kommen insbesondere solche des Molekulargewichtsbereichs 32 bis 500, vorzugsweise 32 bis 300, mit mindestens 2, vorzugsweise 2 oder 3, gegenüber Isocyanatgruppen reaktionsfähigen Amino- und/oder Hydroxylgruppen in Betracht Beispielhaft genannt seien:

- Polyamine des Molekulargewichtsbereichs 60 bis 500, vorzugsweise 60 bis 300, wie Ethylendiamin, 1,2- und 1,3-Propylendiamin, Tetramethylendiamin, Hexamethylendiamin, Dodekamethylendiamin, Trimethyldiaminohexan, N,N'-Dimethylethylendiamin, 2,2'-Bisaminopropyl-methylamin, höhere Homologe des Ethyldiamins wie Diethylentriamin, Triethylentetramin und Tetraethylenpentamin, Homologe des Propylendiamins wie Dipropylentriamin, Piperazin, N,N'-Bisaminoethylpiperazin, Triazin, 4-Aminobenzylamin, 4-Aminophenylethylamin, 1-Amino-3,3,5-trimethyl-5-aminomethyl-cyclohexan, 4,4'-Diaminodicyclohexylmethan und -propan, 1,4-Diaminocyclohexan, Phenylendiamine, Naphthylendiamine, Kondensate aus Anilin und Formaldehyd, Toluylendiamine, die Bis-aminomethylbenzole und die an einem oder beiden Stickstoffatomen monoalkylierten Derivate der genannten aromatischen Amine.
- Hydrazin, wie Hydrazin-reagierende Verbindungen oder Hydrazinderivate des Molekulargewichtsbereichs 32 bis 500, vorzugsweise 32 bis 300, wie Hydrazin, Hydrazinhydrat, N,N'-disubstituierte Hydrazine, wobei die Substituenten $C_1$-$C_6$-Alkylgruppen, Cyclohexylgruppen oder Phenylgruppen sein können oder Hydrazide 2- oder mehrwertiger Carbonsäuren der bereits oben im Zusammenhang mit den Polyesterpolyolen beispielhaft genannten Art.
- Aminoalkohole des Molekulargewichtsbereichs 61 bis 200 wie beispielsweise Ethanolamin, Diethanolamin, Triethanolamin, N-Methyl-diethanolamin, Propanolamin, Dipropanolamin oder Tripropanolamin.
- Mehrwertige Alkohole mit vorzugsweise primären Hydroxylgruppen des Molekulargewichtsbereichs 62 bis 200 wie beispielsweise Ethylenglykol, 1,4-Dihydroxybutan, 1,6-Dihydroxyhexan, Diethylenglykol oder Trimethylolpropan.

Durch den Einbau ionischer Zentren in die Polyadditionsprodukte a) können die anwendungstechnischen Eigenschaften der Dispersionen modifiziert werden. So erleichtert beispielsweise der Einbau von Carboxylat-, Sulfonat- oder von Ammoniumgruppen die Wasserlöslichkeit der Dispersionen, während die Färbbarkeit der Substrate im allgemeinen durch die Mitverwendung von Ammoniumgruppen aufweisenden Verbindungen verbessert wird.

Zum Einbau von Carboxylatgruppen in die Polyadditionsprodukte a) empfiehlt sich die Verwendung bzw. Mitverwendung von NCO-reaktiven Reaktionspartnern a2) mit Carboxylatgruppen oder mit in Carboxylatgruppen überführbaren Carboxylgruppen. Beispielhaft genannt seien Dimethylolpropionsäure, Glutaminsäure, Lysin oder 3,5-Diaminobenzoesäure bzw. die Alkali- und/oder Ammoniumsalze auf Basis tertiärer Amine dieser Säuren. Im Falle der Verwendung der freien Säuren kann die Neutralisation im Anschluß an die Isocyanat-Polyadditionsreaktion vorgenommen werden, wobei beispielsweise als Neutralisationsmittel tertiäre Amine wie Triethylamin, Alkalihydroxide oder auch Ammoniak in Betracht kommen.

Zum Einbau von Sulfonatgruppen in die Polyadditionsprodukte a) empfiehlt sich die Verwendung bzw. Mitverwendung NCO-reaktiven Aufbaukomponenten a2) mit eingebauten Sulfonatgruppen oder mit in Sulfonatgruppen überführbaren Sulfonsäuregruppen. Beispielhaft genannt seien Ethylendiamin-$\beta$-ethyl-sulfonsäure, Ethylendiamin-propyl- oder butyl-sulfonsäure, 1,2- oder 1,3-Propylendiamin-$\beta$-ethylsulfonsäure oder die Alkali- und/oder Ammoniumsalze auf Basis tertiärer Amine dieser Säuren. Im Falle der Verwendung der entsprechenden freien Säuren (weniger bevorzugt) erfolgt eine nachträgliche Neutralisation der eingebauten Sulfonsäuregruppen entsprechend den oben gemachten Ausführungen.

Zum Einbau von Ammoniumgruppen in die Polyadditionsprodukte a) empfiehlt sich die Mitverwendung von tertiärer Aminstickstoffatome aufweisenden Aufbaukomponenten a2) wie beispielsweise N-Methyldiethanolamin, N-Methyl-N-(2-amino-ethyl)-ethylendiamin und/oder von N-Methyl-dipropanolamin, wobei sich im Anschluß an die Polyadditionsreaktion eine Neutralisation beispielsweise mit Essigsäure oder Dimethylolpropionsäure oder Quarternierung beispielsweise mit Methyliodid der eingebauten tert. Stickstoffatome zwecks Überführung in Ammoniumgruppen anschließt.

Die Menge der ionischen oder potentiell ionischen Aufbaukomponenten a2) bzw. der Neutralisationsoder Quarternierungsgrad der eingebauten potentiell ionischen Zentren werden, falls eine ionische Modifizierung der Polyadditionsprodukte a) überhaupt beabsichtigt ist, im allgemeinen so gewählt, daß bis zu 500, vorzugsweise 100 bis 500 Milliäquivalente an ionischen Gruppen pro 100 g disperser Phase a) vorliegen.

Die Herstellung der erfindungswesentlichen Dispersionen erfolgt, wie bereits ausgeführt, vorzugsweise in situ durch Umsetzung der Ausgangskomponenten a1) und a2) in den Polyhydroxylverbindungen b) als Reaktionsmedium, wobei die Mengenverhältnisse so gewählt werden, daß die Isocyanatkennzahl, bezogen auf die Isocyanatgruppen der Komponente a1) und die NCO-reaktiven Gruppen der Komponente a2) bei 80 bis 120, vorzugsweise 95 bis 105, liegt, und wobei die Gesamtmenge der Komponenten a1), a2) und b) so bemessen wird, daß 1- bis 50-, vorzugsweise 5- bis 30, gew.-%ige Dispersionen von a) in b) resultieren.

Die Umsetzung erfolgt vorzugsweise innerhalb des Temperaturbereichs von 60 bis 110°C, wobei oftmals in Wasser lösliche, ausschließlich Aminogruppen als NCO-reaktive Gruppen aufweisende Aufbaukomponenten a2) in Form von 40- bis 80-gew.-%igen wäßrigen Lösungen zum Einsatz gelangen. Im allgemeinen wird bei der Herstellung der Dispersionen so verfahren, daß man entweder ein Gemisch der Komponenten a2) und b) vorlegt und die Isocyanatkomponente a1) unter heftigem Rühren in die Mischung einträgt oder daß man die Isocyanatkomponente a1) und die NCO-reaktive Komponente a2) gleichzeitig unter heftigem Rühren mit der Komponente b) vereinigt, oder das man eine Lösung der Komponente a1) in einem Teil der Komponente b) mit einer Lösung der Komponente a2) in der restlichen Menge der Komponente b) unter heftigem Rühren vereinigt.

Im Falle der Verwendung von wäßrigen Lösungen von Ausgangskomponenten a2) kann die Entfernung des eingetragenen Wassers im Anschluß an die Polyadditionsreaktion, beispielsweise durch Abdestillieren im Vakuum erfolgen.

Die Art der Herstellung der Dispersionen ist jedoch nicht erfindungswesentlich. Grundsäztlich denkbar wäre beispielsweise auch eine Arbeitsweise, gemäß welcher eine wäßrige Dispersion eines ionisch modifizierten Polyadditionsprodukt aus Ausgangskomponenten a1) und a2) mit einer Polyhydroxylverbindung b) vermischt wird, worauf sich eine destillative Entfernung des Dispersionswassers anschließt.

Die erfindungswesentlichen Dispersionen werden bei der Durchführung des erfindungsgemäßen Verfahrens im allgemeinen in solchen Mengen eingesetzt, daß die disperse Phase a) in einer Menge von 0,5 bis 30 Gew.-%, vorzugsweise von 1 bis 10 Gew.-%, bezogen auf Blößen- oder Falzgewicht zu Verfügung steht Im allgemeinen werden die erfindungswesentlichen Dispersionen bei der Durchführung des erfindungsgemäßen Verfahrens in Form von wäßrigen Flotten eingesetzt, die mindestens 1, vorzugsweise 1 bis 10 Gew.-% der Dispersionen enthalten. Hierbei können die erfindungswesentlichen Dispersionen als alleinige Gerbstoffe oder in Kombination mit anderen Gerbstoffen und/oder in Kombination mit in der Gerbtechnik üblichen Hilfs- und Zusatzmittein zur Anwendung gelangen. Im Falle der alleinigen Verwendung der erfindungswesentlichen Dispersionen als Gerbstoff resultieren beim erfindungsgemäßen Verfahren keine vollwertige Leder, jedoch wird meist die Schrumpfungstemperatur erhöht. Dadurch sind die erfindungsgemäß zu verwendenden Dispersionen z.B. für "Wet White-Verfahren" geeignet, da erfindungsgemäß vorgegerbte Leder sich falzen und bearbeiten lassen wie es für dieses Verfahren erforderlich ist (vgl. K.Faber (Herfeld, Bibliothek des Leders, Bd. 3), "Gerbmittel, Gerbung und Nachgerbung", Frankfurt (1984), S. 184).

Falls die erfindungsgemäß zu verwendenden Dispersionen, insbesondere die disperse Phase a) nicht ausreichend wasserdispergierbar sind, kann die Wasserverträglichkeit durch Mitverwendung von hydrophilen Lösungsmitteln wie beispielsweise Ethanol oder von Emulgatoren wie beispielsweise ethoxyliertem Laurylalkohol oder anderen geeigneten Hilfsmitteln wie beispielsweise ®Levotan C der Bayer AG (Polyestercarbonsäure), ®Levotan K der Bayer AG (Oligourethan) oder ®Baytigan der Bayer AG (Produkt auf Basis Poly(meth)acrylsäure) verbessert werden.

Andere Gerbstoffe, die gegebenenfalls in Kombination mit den erfindungswesentlichen Dispersionen beim erfindungsgemäßen Verfahren eingesetzt werden können sind beispielsweise solche des eingangs genannten Standes der Technik, insbesondere phenolische Gerbstoffe der in F. Stather "Gerbereichemie und Gerbereitechnologie", Berlin (1967), S. 356 ff. beschriebenen Art, Oligourethane der in DE-OS 2 739 378 oder DE-OS 2 416 485 beschriebenen Art oder saure Halbester von Polyhydroxylverbindungen der in DE-OS 2 626 430 beschriebenen Art.

Die gegebenenfalls mitverwendeten sonstigen Gerbstoffe werden, falls überhaupt, in Mengen von bis zu 500 Gew.-%, vorzugsweise von 0,5 bis 100 Gew.-%, bezogen auf Blößen- oder Falzgewicht, eingesetzt.

Zu den gegebenenfalls mitverwendeten Hilfs- und Zusatzmitteln gehören neben den bereits oben beispielhaft genannten Hilfsmitteln Fettungsmittel, wäßrige Laugen (beispielsweise Ammoniak oder Triethanolamin) oder Säuren wie beispielsweise Ameisensäure oder Dicarbonsäuren wie Bernsteinsäure, wasserlösliche Lösungsmittel wie beispielsweise Ethanol oder Methylethylketon, um das Aufziehverhalten auf Blößen bzw. vorgegerbtem Leder zu verbessern.

Das erfindungsgemäße Verfahren dient vorzugsweise der Nachgerbung von chromgegerbten Ledern. Hierbei werden die erfindungswesentlichen Dispersionen z.B. mit phenolischen oder polymeren, konventionellen Gerbstoffen eingesetzt. Auch die alleinige Verwendung der erfindungswesentlichen Dispersionen als Gerbstoff ist hierbei möglich.

Die erfindungswesentlichen Dispersionen ziehen stets sehr gut aus den Flotten auf, d.h. bei der Durchführung des erfindungsgemäßen Verfahrens fallen nur geringe Mengen an mit unverbrauchten Chemikalien versetzten Abwässern an. Grundsätzlich kann gesagt werden, daß die erfindungsgemäß gegerbten Leder im allgemeinen sehr voll, gut färbbar und weich sind.

In den nachfolgenden Beispielen beziehen sich alle Prozentangaben auf das Gewicht.

Herstellungsbeispiele:

Beispiel 1:

Herstellen einer hydrophilen Polyharnstoffdispersion in einem hydrophoben Polyetherpolyol

3000 g eines Polyetherspolyols der OH-Zahl 34, hergestellt durch Propoxyliervng von Trimethylolpropan und anschließende Ethoxylierung des Propoxylierungsprodukts (PO:EO-Gewichtsverhältnis = 82:18) und eine Mischung aus 88,5 g Hydrazinhydrat (64 % Hydrazin) und 740 g Ethylendiamin-$\beta$-sulfonsaurem Natrium (45 %ige wäßrige Lösung) werden kontinuierlich bei 20-30°C in einen Statik-Mischer gepumpt (Mengenangaben sind g/min). Gleichzeitig werden 1 000 g/min des obigen Polyethers und 610 g/min einer Mischung aus 80 % 2,4- und 20 % 2,6-Toluylendiisocyanat bei 20-30°C durch einen zweiten Statik-Mischer gepumpt. Beide Teilströme gelangen getrennt voneinander in die Mischzone eines Stachelrührers (Kammervolumen 0,5 1, Drehzahl 5000 U/min), in dem unter exothermer Reaktion Polyaddition erfolgt. Die den Stachelrührer mit einer Temperatur von 80°C verlassende Dispersion läuft in ein Verweilgefäß, wo sie unter schnellem Rühren (entscheidend für eine möglichst niedrige Viskosität) bei 80 bis 100°C für ca. 2 Stunden gehalten wird. Nach dem Nachrühren wird das Wasser bei 100°C im Vakuum abdestilliert. Man erhält eine stabile, weiße, feinteilige, 20 %ige Dispersion mit einer Viskosität von 1300 mPa.s/25°C und einer OH-Zahl von 27,2.

Beispiel 2:

Herstellen einer Polyhydrazodicarhonamld-Dispersion in einem Polyetherdiol

Analog Beispiel 1 werden 3 000 g/min eines Polyetherdiols der OH-Zahl 28, hergestellt durch Propoxylierung von Propylenglykol und anschließende Ethoxylierung des Propoxylierungsprodukts (PO:EO-Gewichstverhältnis = 70:30) und 250 g/min Hydrazinhydrat sowie 1 000 g/min des gleichen Polyethers mit 840 g/min Hexamethylendiisocyanat und als Katalysator 0,45 g Dibutylzinndilaurat kontinuierlich in einen Stachelrührer eingeführt. Nach Vermischen und entsprechender Aufarbeitung erhält man eine weiße, feinteilige, 20 %ige Dispersion mit einer Viskosität von 4650 mPa.s/25°C und einer OH-Zahl von 22,4.

Beispiel 3:

Herstellung einer hydrophilen Polyharnstoff-Dispersion in einem hydrophilen Polyetherdiol

In einem 2 1-Vierhalskolben werden 800 g eines hydrophilen Polyetherdiols der OH-Zahl 56, hergestellt durch Alkoxylierung von Propylenglykol unter Verwendung eines Gemischs aus Propylenoxid und Ethylenoxid im Gewichtsverhältnis 1:1, 148 g Ethylendiamin-ß-sulfonsaures Natrium (als 45 %ige wäßrige Lösung), 17,7 g Hydrazinhydrat (mit 64 % Hydrazin) und 12 g Wasser vorgelegt. Nach Aufheizen auf 95 bis 100°C werden 122 g einer Mischung aus 80 % 2,4- und 20 % 2,6-Toluylendiisocyanat unter heftigem Rühren zugetropft Nach 1 Stunde Nachreaktion erhält man nach Abdestillieren des Wassers eine stabile, weiße, feinteilige, 20 %ige Dispersion mit einer Viskosität von 1 590 mPa.s/25°C und einer OH-Zahl von 44,8.

Beispiel 4:

Herstellung einer Polyurethan-Dispersion in einem hydrophilen Polyetherdiol

800 g des linearen Polyethers aus Beispiel 3 der OH-Zahl 56, 101 g N-Methyldiethanolamin, 0,05 g Dibutylzinndilaurat werden in einem 2 1-Vierhalskolben bei Raumtemperatur vorgelegt. Dann gibt man bei Raumtemperatur 99 g einer Mischung aus 80 % 2,4- und 20 % 2,6-Toluylendiisocyanat schnell zu. Nach Aufheizen wird 1 Stunde bei 100°C nachgerührt. Die basische Dispersion wird dann mit 113,8 g Dimethylolpropionsäure und 110 g Wasser neutralisiert. Man erhält eine feinteilige, weiße Dispersion mit einer Viskosität von 3120 mPa.s/25°C und einem pH-Wert von 6,6.

Beispiel 5

Herstellung einer Polyhydrazodicarbonamid-Dispersion in einem Polycarbonatdiol

Analog Beispiel 1 werden 3 000 g/min Triethylenglykolpolycarbonat der OH-Zahl 56 (Visk. 36 000 mPas/25°C) und 245 g/min Hydrazinhydrat sowie 1 000 g/min des gleichen Polycarbonates mit 845 g/min einer Mischung aus 80 % 2,4- und 20 % 2,6-Toluylendiisocyanat kontinuierlich in einen Stachelrührer eingepumpt, in dem unter exothermer Reaktion die Polyaddition erfolgt. Nach entsprechender Aufarbeitung erhält man eine stabile, weiße, 20 %ige Dispersion des Polyhydrazodicarbonamids im Polycarbonat mit einer Viskosität von 55 000 mPas/25°C und einer OH-Zahl von 44,8.

Anwendungsbeispiele:

Anwendungsbeispiel 1

Ein ca. DIN A5-großes Stuck Blöße wird in 200 % Flotte, bezogen auf Blößengewicht, bestehend im wesentlichen aus einer Mischung aus 20 Gew.-Teilen der Polyharnstoffdispersion gemäß Beispiel 1 und 80 Gew.-Teilen Wasser, bei Raumtemperatur über Nacht in einer Flasche gegerbt. Am nächsten Morgen wird die gegerbte Blöße herausgenommen, kurz gewaschen und dann auf ein Brett aufgenagelt und bei Raumtemperatur trocknen gelassen. Es entsteht ein weißes Leder, das eine Schrumpfungstemperatur von 65°C aufwies.

Anwendungsbeispiel 2

Ein chromgegerbtes feuchtes (ca. 60 % Wasser enthaltendes) Leder wird ebenfalls in einer Flasche mit 100 % Flotte, bezogen auf das Gewicht des Leders, bestehend im wesentlichen aus 3 Gew.-Teilen der Polyharnstoffdispersion gemäß Beispiel 1 und 97 Gew.-Teilen Wasser behandelt. Parallel dazu wird ein chromgegerbtes Leder mit einer 3 %igen wäßrige Flotte auf Basis eines handelsüblichen phenolischen Gerbstoffes nachgegerbt und anschließend mit 10 % einer Standardfettungsmittelmischung bestehend aus (bezogen auf Blößengewicht) 5 % synthetischer paraffinischer Verbindung, 4 % synthetischem Spermölersatz und 1 % chloriertem Paraffin behandelt wird, laufen. Nach 4 Stunden Behandeln in einer Flasche wurden beide Leder entnommen. Das mit dem Polyhydrazodicarbonamid ohne zu sätzliches Fett nachgegerbte Leder war deutlich weicher als das konventionell hergestellte. Das erfindungsgemäß behandelte Leder hat einen vollen Griff und ist sehr gut pigmentiert.

Anwendungsbeispiel 3

Um die Wasserlöslichkeit der Polyharnstoffdispersion gemäß Beispiel 1 weiter zu verbessern, wurde sie in zwei Parallelversuchen mit 25 96 Ethanol bzw. 5 % eines nichtionischen Emulgators (auf Basis Nonylphenolethoxylat) versetzt und innig vermischt Beide Mischungen wurden getrennt voneinander in Form von 12 %igen wäßrigen Flotten auf chromgegerbtes Leder gegeben, welches jeweils in 50 % Flotte in einer Flasche nachgegerbt wurde. Auch hier wurde nach dem Trocknen ein sehr weiches Leder erhalten.

Anwendungsbeispiel 4

80 g der in Beispiel 1 beschriebenen Polyharnstoffdispersion wurden mit 20 g einer 50 %igen Lösung eines synthetischen Gerbstoffs (auf Basis eines Formaldehyd-Kondensationsprodukts aus 4,4'-Dihydroxydiphenylsulfon und Naphthalinsulfonsäure, ®Tanigan BN flüssig der BAYER AG) versetzt, was eine Nachgerbmischung ergab. Ein wet-blue Leder wurde halbiert, nachdem es zuvor in 200 % warmem Wasser (40°C, 10 Minuten), sodann weiteren 200 % 40°C warmem Wasser, das 0,1 % 85 %ige Ameisensäure enthielt, behandelt. Dann fügte man 2,5 % eines neutralisierenden Gerbstoffes (®TANIGAN PAK-N der BAYER AG) in weiteren 100 % Wasser bei 40°C (40 Minuten lang) hinzu. Es stellte sich ein pH-Wert von 4,5 ein. Dann gab man zur Adjustierung des pH-Wertes 0,5 % 85 %ige Ameisensäure hinzu (15 Minuten Laufzeit); es stellte sich ein pH-Wert von 3,9 ein. Darauf ließ man die Flotte ab. Man wusch einmal mit 200 % 40°C warmem Wasser (10 Minuten lang) und ließ die Flotte erneut ab. Dann gab man 10 % der oben hergestellten Nachgerbmischung, die kurz vor der Verwendung mit warmem Wasser im Verhältnis 1:4 emulgiert worden war, in das bereits mit weiteren 100 % 40°C warmem Wasser versehene Fass. Man ließ 30 Minuten laufen (pH-Wert 3,7) und ließ dann die Flotte wieder ab. Eine Bestimmung der Restflotte auf zugesetztes Produkt ergab, daß das Produkt zu mehr als 95 % ausgezehrt war. Man wusch noch einmal mit 200 % 20°C warmem Wasser (10 Minuten lang) und ließ die Flotte ab. Das Leder wurde auf einen Bock gelegt, dann vakuumiert, getrocknet, schließlich klimatisiert und beurteilt. Im Vergleich zu einem konventionellen, mit Hilfe von Fettungsmitteln hergestellten Leder war es deutlich weicher, voller und runder im Griff. (Alle %-Angaben beziehen sich auf das Falzgewicht der wet-blue Leder.)

Ähnlich positiv verliefen Versuche, das Produkt mit 20 % einer Polyestercarbonsäure (®Levotan C der BAYER AG) bzw. 20 % eines Oligourethans (®Levotan K der BAYER AG) zu versetzen und chromgegerbte Leder damit nachzugerben. Auch hier zeigte sich, daß alle Versuche, bei denen ein Produkt des Beispiels 1 enthalten waren, sehr weich, rund und voll waren.

Analog Anwendungsbeispiel 1 wurden die folgenden Beispiele durchgeführt:

**Alleingerbungen (in 200% Flotte)**

| Anwendungs-beispiel | Dispersion aus Beispiel | % Dispersion, bezogen auf Blößengewicht | TS[1] [°C] | Gerbwirkung |
|---|---|---|---|---|
| A 5 | 3 | 25 | 67 | geringe Gerbung, hart und flach, Lederfarbe gelblich |
| A 6 | 4 | 25 | 61 | recht gute Gerbwirkung weicher und Lederfarbe heller als A 5 |
| A 7 | 5 | 25 | 61 | geringe Gerbwirkung |
| A 8 | 2 | 25 | 66 | Gerbwirkung vorhanden, aber noch etwas blößenartig |

[1])Schrumpfungstemperatur

Nachgerbungen (in 100% Flotte)

| Anwendungs-beispiel | Dispersion aus Beispiel | % Dispersion auf Falzgewicht | Gerbwirkung |
|---|---|---|---|
| A 9 | 3 | 3 | weich, voll, Lederfarbe hell |
| A 10 | 4 | 3 | fester, voll, Lederfarbe grüner |
| A 11 | 5 | 3 | weiches Leder |
| A 12 | 2 | 3 | fester, voll, Lederfarbe grüner |

## Patentansprüche

1. Verfahren zum füllenden Gerben und/oder Nachgerben von Leder mit gerberisch aktiven Stoffen, dadurch gekennzeichnet, daß man als gerberisch aktive Stoffe

    1- bis 50-gew.-%ige Dispersionen von

        a) gegebenenfalls ionisch modifizierten, Hydrazodicarbonamid-, Harnstoff- und/oder Urethangruppen-aufweisenden Polyisocyanat-Polyadditionsprodukten in

        b) organischen Polyhydroxylverbindungen des Molekulargewichtsbereichs 500 bis 12 000,

in Mengen von 0,5 bis 30 Gew.-%, bezogen auf Polyisocyanat-Polyadditionsprodukte a) einerseits und Blößen- oder Falzgewicht andererseits, gegebenenfalls in Kombination mit sonstigen gerberisch aktiven Substanzen und/oder mit in der Gerberei üblichen Hilfs- und Zusatzmitteln verwendet.

## Claims

1. A process for the filling tanning and/or retanning of leather with tanning-active substances, characterized in that 1 to 50% by weight dispersions of

    a) optionally ionically modified polyisocyanate polyaddition products containing hydrazodicarbonamide, urea and/or urethane groups in

    b) organic polyhydroxyl compounds having a molecular weight of 500 to 12,000

are used as the tanning-active substances in quantities of 0.5 to 30% by weight, based on polyisocyanate polyaddition products a) on the one hand and pelt weight or pared weight on the other hand, optionally in combination with other tanning-active substances and/or auxiliaries and additives typically used in tanning.

**Revendications**

1. Procédé de tannage garnissant et/ou de retannage de cuir avec des substances à effet tannant, caractérisé en ce qu'on utilise comme substances à effet tannant
   1 à 50% en poids de dispersions de
      a) produits de polyaddition de polyisocyanate présentant des groupes hydrazodicarbonamide, urée et/ou uréthane ioniquement modifiés le cas échéant dans
      b) des composés polyhydroxylés organiques de poids moléculaire compris entre 500 et 12 000,
   en des quantités de 0,5 à 30% en poids par rapport aux produits de polyaddition de polyisocyanate a) d'une part et par rapport au poids de cuir ou de peau planée, le cas échéant avec d'autres substances à action tannante et/ou avec des additifs et produits auxiliaires usuels en tannerie.